# EUROPEAN PATENT SPECIFICATION

(11) **EP 4 058 272 B1**
(45) Date of publication and mention of the grant of the patent: **15.10.2025**
(21) Application number: 20803635.0
(22) Date of filing: 09.11.2020
(51) Int. Cl.: B29C 65/02, B29C 65/08, B29C 65/18, B29C 65/30, B29C 65/78, B29C 65/82, B29C 53/58, B29C 53/80, F16L 1/16, F16L 11/08

(54) **SPLICING METHOD**
SPLEISSVERFAHREN
PROCÉDÉ D'ÉPISSAGE

(30) Priority: 11.11.2019 GB 201916362
(43) Date of publication of application: 21.09.2022
(60) Divisional application: 22200391.5
(73) Proprietor: Baker Hughes Energy Technology UK Limited, Bristol BS48 1BS (GB)
(72) Inventor: FINCH, David, Newcastle upon Tyne Tyne and Wear NE6 3PF (GB); DAWSON, Christopher, Newcastle upon Tyne Tyne and Wear NE6 3PF (GB); CALDWELL-BARR, Wayne, Newcastle upon Tyne Tyne and Wear NE6 3PF (GB); AL-ZUBAIDY, Majeed, Newcastle upon Tyne Tyne and Wear NE6 3PF (GB); MINTZAS, Angelos, Newcastle upon Tyne Tyne and Wear NE6 3PF (GB)
(74) Representative: Novagraaf Group
(86) International application number: PCT/GB2020/052835
(87) International publication number: WO 2021/094718

(56) References cited:
- EP-A1- 2 796 272
- EP-B1- 2 796 272
- WO-A1-2008/120023
- WO-A1-90/08027
- US-A1- 2019 134 920

## Description

The present invention relates to a splicing method. In particular, but not exclusively, the present invention relates to a method for splicing, by overlap, two ends of composite tape during the manufacture of a flexible pipe for transporting fluid from a subsea location.

Traditionally flexible pipe is utilised to transport production fluids, such as oil and/or gas and/or water, from one location to another. Flexible pipe is particularly useful in connecting a sub-sea location (which may be deep underwater) to a sea level location. The pipe may have an internal diameter of typically up to around 0.6 metres (e.g. diameters may range from 0.05 m up to 0.6 m). Flexible pipe is generally formed as an assembly of a flexible pipe body and one or more end fittings. The pipe body is typically formed as a combination of layered materials that form a pressure-containing conduit. The pipe structure allows large deflections without causing bending stresses that impair the pipe's functionality over its lifetime. The pipe body is generally built up as a combined structure including a plurality of layers including at least one of: polymer layers, metallic layers, and composite layers. For example, a pipe body may include polymer and metal layers, or polymer and composite layers, or polymer, metal and composite layers.

API Recommended Practice 17B provides guidelines for the design, analysis, manufacture, testing, installation, and operation of flexible pipes and flexible pipe systems for onshore, subsea and marine applications.

API Specification 17J titled "Specification for Unbonded Flexible Pipe" defines the technical requirements for safe, dimensionally and functionally interchangeable flexible pipes that are designed and manufactured to uniform standards and criteria.

In many known flexible pipe designs the pipe body includes one or more pressure armour layers. The primary load on such layers is formed from radial forces. Pressure armour layers often have a specific cross section profile to interlock so as to be able to maintain and absorb radial forces resulting from outer or inner pressure on the pipe. The cross sectional profile of the wound wires which thus prevent the pipe from collapsing or bursting as a result of pressure are sometimes called pressure-resistant profiles. When pressure armour layers are formed from helically wound wires forming hoop components, the radial forces from outer or inner pressure on the pipe cause the hoop components to expand or contract, putting a tensile load on the wires.

In many known flexible pipe designs the pipe body includes one or more tensile armour layers. The primary loading on such a layer is tension. In high pressure applications, such as in deep and ultra deep water environments, the tensile armour layer experiences high tension loads from a combination of the internal pressure end cap load and the self-supported weight of the flexible pipe. This can cause failure in the flexible pipe since such conditions are experienced over prolonged periods of time.

Unbonded flexible pipe has been used for deep water (less than 3,300 feet (1,005.84 metres)) and ultra deep water (greater than 3,300 feet) developments. It is the increasing demand for oil which is causing exploration to occur at greater and greater depths where environmental factors are more extreme. For example in such deep and ultra-deep water environments ocean floor temperature increases the risk of production fluids cooling to a temperature that may lead to pipe blockage. Increased depths also increase the pressure associated with the environment in which the flexible pipe must operate. For example, a flexible pipe may be required to operate with external pressures ranging from 0.1 MPa to 30 MPa acting on the pipe. Equally, transporting oil, gas or water may well give rise to high pressures acting on the flexible pipe from within, for example with internal pressures ranging from zero to 140 MPa from bore fluid acting on the pipe. As a result the need for high levels of performance from the layers of the flexible pipe body is increased.

Flexible pipe may also be used for shallow water applications (for example less than around 500 metres depth) or even for shore (overland) applications.

One way to improve the load response and thus performance of armour layers is to manufacture the layers from thicker and stronger and thus more robust materials. For example for pressure armour layers in which the layers are often formed from wound wires with adjacent windings in the layer interlocking, manufacturing the wires from thicker material results in the strength increasing appropriately. However as more material is used the weight of the flexible pipe increases. Ultimately the weight of the flexible pipe can become a limiting factor in using flexible pipe. Additionally manufacturing flexible pipe using thicker and thicker material increases material costs appreciably, which is also a disadvantage.

Some flexible pipe designs therefore include one or more pressure armour layers or tensile armour layers formed from a composite material. The composite pressure armour layer or tensile armour layer is often formed from a helically wound composite tape. The composite tape is supplied in discrete lengths and as such, it is necessary to join lengths of composite tape together to form a continuous pressure armour layer or helical tensile armour layer over the whole length of the flexible pipe.

WO 90/08027 A1 describes a method of joining plastics materials. EP 2 796 272 A1 describes a method for connecting members. US 2019/134920 A1 describes a fiber-reinforced thermoplastic resin member welding method. WO 2008/120023 A1 describes an apparatus for producing single ply, continuous, cross ply or angle ply thermoplastic prepregs.

The invention is defined in the appended claims. According to a first aspect of the present invention there is provided a method of manufacturing an armour layer of a flexible pipe for transporting fluid from a subsea location, the method comprising:
winding a first length of composite tape to form a first section of the armour layer;
positioning an end region of the first length of composite tape over an end region of a second length of composite tape to form an overlapping tape section and applying heat and pressure to the overlapping tape section to form a joined overlapping tape section in which the first length of tape is joined to the second length of tape such that the joined overlapping tape section has a lap shear strength of at least 11 MPa; and
winding the joined overlapping tape section and the second length of composite tape to form a second section of the armour layer.

According to an aspect of the present disclosure there is provided a method of splicing composite tape for use in a flexible pipe for transporting fluid from a subsea location, the method comprising:
positioning an end region of a first length of tape over an end of a second length of tape to form an overlapping tape section and applying heat and pressure to the overlapping tape section to form a joined overlapping tape section in which the first length of tape is joined to the second length of tape such that the joined overlapping tape section has a lap shear strength of at least 11 MPa.

Suitably, at least one of the heat and pressure is applied to the overlapping tape section via at least one press plate comprising a bearing surface.

Suitably, at least one of the heat and pressure is applied evenly over the overlapping tape section.

Suitably, at least one of the heat and pressure is applied unevenly over the overlapping tape section.

Suitably, at least one of the heat and pressure is applied unevenly either across or along the overlapping tape section.

Suitably, at least one of the heat and pressure is applied progressively along a length of the overlapping tape section from a first end of the overlapping tape section to a second end of the overlapping tape section.

Suitably, at least one of the heat and pressure is applied to the overlapping tape section via at least one roller.

Suitably, applying the heat and pressure comprises commencing the application of heat at a different time to commencing the application of pressure.

Suitably, applying the heat and pressure comprises commencing the application of pressure prior to commencing the application of heat.

Suitably, the first and second end regions are cleaned.

Suitably, the method further comprises monitoring at least one of the applied heat or the applied pressure.

Suitably, the method further comprises controlling, in response to the monitoring, at least one of the applied heat or the applied pressure.

Suitably, the method further comprises pre-heating the end region of at least one of the first or second lengths of tape, prior to forming the overlapping tape section.

Suitably, the method further comprises vibrating the overlapping tape section.

Suitably, the vibrating the overlapping tape section comprises applying ultrasonic range vibrations to the overlapping tape section.

Suitably, the overlapping tape section is vibrated laterally and/or longitudinally.

According to a second aspect of the present invention there is provided a method of splicing composite tape for use in a flexible pipe for transporting fluid from a subsea location, the method comprising:
positioning an end region of a first length of tape over an end of a second length of tape to form an overlapping tape section and applying heat and pressure to the overlapping tape section to form a joined overlapping tape section in which the first length of tape is joined to the second length of tape.

The overlapping tape section may optionally be configured such that a lap shear strength of the overlapping tape section is at least 11 MPa.

Aptly, the second aspect of the present invention may include any features described above in relation to the first aspect.

According to a third aspect of the present disclosure, which does not form part of the invention, there is provided an apparatus for splicing a composite tape for use in a flexible pipe for transporting fluid from a subsea location, the apparatus comprising:
a first bearing surface;
a second bearing surface disposed opposite the first bearing surface;
a heater configured to heat a region between the first and second bearing surfaces;
wherein the first and second bearing surfaces are moveable with respect to each other to thereby apply a compressive force to end regions of a first and second length of tape when positioned therebetween.

Suitably, the first bearing surface is configured for supporting the end region of the first length of tape.

Suitably, the second bearing surface is configured for supporting the end region of the second length of tape.

Suitably, at least one of the first or second bearing surfaces comprises a substantially planar surface.

Suitably, at least one of the first or second bearing surfaces comprises a curved or rounded bearing surface.

Suitably, at least one of the first or second bearing surfaces comprises a heat resistant, non-stick surface.

Suitably, at least one of the first or second bearing surfaces comprises a plurality of ridges or undulations.

Suitably, the apparatus further comprises a first press plate comprising the first bearing surface.

Suitably, the apparatus further comprises a second press plate comprising the second bearing surface.

Suitably, at least one of the first and second bearing surfaces comprises at least one longitudinal guide extending therefrom.

Suitably, at least one of the bearing surfaces is configured to vibrate.

Suitably, at least one of the bearing surfaces is configured to vibrate at an ultrasonic frequency.

Suitably, at least one of the bearing surfaces is configured to vibrate laterally and/or longitudinally.

According to an aspect of the present disclosure there is provided use of the apparatus of the third aspect of the disclosure for splicing a composite tape for use in a flexible pipe for transporting fluid from a subsea location.

It will be appreciated that the method according to the first and second aspects can be carried out using any of the apparatus features described in relation to the third aspect of the disclosure.

Certain embodiments of the invention provide the advantage that the join between discrete sections of composite tape may have improved strength compared to joins achieved through previously known splicing methods.

Certain embodiments of the invention provide the advantage that the splicing of two discrete lengths of composite tape can be better controlled compared to previously known splicing methods. For example, certain embodiments of the invention allow tape splicing parameters to be stored, thus allowing the same joint to be repeated throughout the manufacturing process.

Certain embodiments of the invention allow for improved accuracy and repeatability of the splicing method compared to previously known splicing methods. This enables the strength of each join to be consistent. Repeatability of spliced joints ensures the tape strength required for the tape to pass from the spool to the touch down point without breaking is met.

Embodiments of the invention are further described hereinafter with reference to the accompanying drawings, in which:
Fig. 1 illustrates a flexible pipe body;
Fig. 2 illustrates a riser assembly;
Fig. 3 illustrates a perspective view of an example composite tape splicing apparatus;
Fig. 4a illustrates a plan view of the composite tape splicing apparatus of Fig. 3;
Fig. 4b illustrates portion of the composite tape splicing apparatus of Fig. 4a;
Fig. 5a illustrates a side view of press plates of a first example;
Fig. 5b illustrates a front view of the press plates of Fig. 5a;
Fig. 6 illustrates a side view of press plates of a further example;
Fig. 7a illustrates a side view of press plates of a yet further example;
Fig. 7b illustrates a front view of the press plates of Fig. 7a;
Fig. 8a illustrates a side view of press plates of another example;
Fig. 8b illustrates a front view of the press plates of Fig. 8a;
Fig. 9a illustrates a side view of a press plate and roller;
Fig. 9b illustrates a front view of the press plate and roller of Fig. 9a;
Fig. 10 illustrates a flow diagram of a method of splicing composite tape;
Fig. 11a illustrates positioning of first and second lengths of tape;
Fig. 11b illustrates the first and second lengths of tape during application of heat and pressure; and
Fig. 12 illustrates a splicing apparatus in position relative to a production line.

In the drawings like reference numerals refer to like parts.

As used herein, reference is made to "lap shear strength" of the overlapping tape section. This term is used to describe the shear strength of bonded materials when tested on a single-lap-joint specimen, as tested generally in accordance with ASTM D5868.

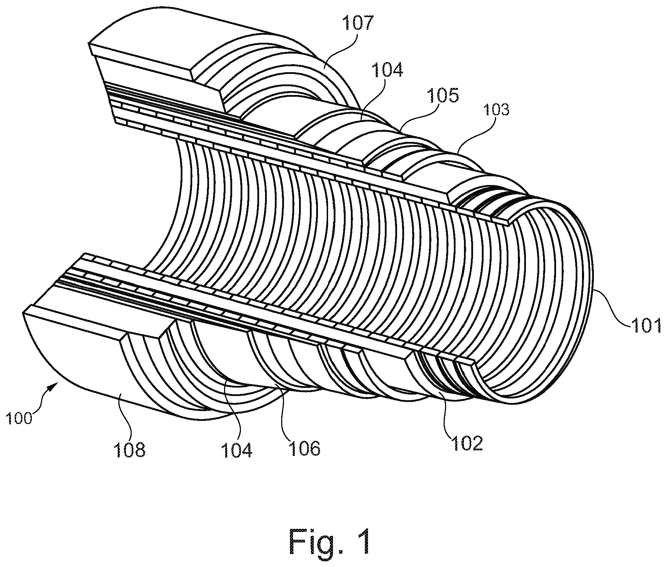

Throughout this description, reference will be made to a flexible pipe. It will be understood that a flexible pipe is an assembly of a portion of pipe body and one or more end fittings in each of which a respective end of the pipe body is terminated. Fig. 1 illustrates how pipe body 100 is formed in accordance with an embodiment from a combination of layered materials that form a pressure-containing conduit. Although a number of particular layers are illustrated in Fig. 1, it is to be understood that the pipe body is broadly applicable to coaxial structures including two or more layers manufactured from a variety of possible materials. For example, the pipe body may be formed from polymer layers, metallic layers, composite layers, or a combination of different materials. It is to be further noted that the layer thicknesses are shown for illustrative purposes only. As used herein, the term "composite" is used to broadly refer to a material that is formed from two or more different materials, for example a material formed from a matrix material and reinforcement fibres.

As illustrated in Fig. 1, a pipe body includes an optional innermost carcass layer 101. The carcass provides an interlocked construction that can be used as the innermost layer to prevent, totally or partially, collapse of an internal pressure sheath 102 due to pipe decompression, external pressure, and tensile armour pressure and mechanical crushing loads. The carcass layer is often a metallic layer, formed from stainless steel, for example. The carcass layer could also be formed from composite, polymer, or other material, or a combination of materials. It will be appreciated that certain embodiments are applicable to 'smooth bore' operations (i.e. without a carcass layer) as well as such 'rough bore' applications (with a carcass layer).

The internal pressure sheath 102 acts as a fluid retaining layer and comprises a polymer layer that ensures internal fluid integrity. It is to be understood that this layer may itself comprise a number of sub-layers. It will be appreciated that when the optional carcass layer is utilised the internal pressure sheath is often referred to by those skilled in the art as a barrier layer. In operation without such a carcass (so-called smooth bore operation) the internal pressure sheath may be referred to as a liner.

An optional pressure armour layer 103 is a structural layer that increases the resistance of the flexible pipe to internal and external pressure and mechanical crushing loads. The layer also structurally supports the internal pressure sheath, and typically may be formed from an interlocked construction of wires wound with a lay angle close to 90°. The pressure armour layer is often a metallic layer, formed from carbon steel, for example. The pressure armour layer could also be formed from composite, polymer, or other material, or a combination of materials.

The flexible pipe body also includes an optional first tensile armour layer 105 and optional second tensile armour layer 106. Each tensile armour layer is used to sustain tensile loads and internal pressure. The tensile armour layer is often formed from a plurality of wires (to impart strength to the layer) that are located over an inner layer and are helically wound along the length of the pipe at a lay angle typically between about 10° to 55°. The tensile armour layers are often counter-wound in pairs. The tensile armour layers are often metallic layers, formed from carbon steel, for example. The tensile armour layers could also be formed from composite, polymer, or other material, or a combination of materials.

The flexible pipe body shown also includes optional layers of tape 104 which help contain underlying layers and to some extent prevent abrasion between adjacent layers. The tape layer may be a polymer or composite or a combination of materials.

The flexible pipe body also typically includes optional layers of insulation 107 and an outer sheath 108, which comprises a polymer layer used to protect the pipe against penetration of seawater and other external environments, corrosion, abrasion and mechanical damage.

Each flexible pipe comprises at least one portion, sometimes referred to as a segment or section of pipe body 100 together with an end fitting located at at least one end of the flexible pipe. An end fitting provides a mechanical device which forms the transition between the flexible pipe body and a connector. The different pipe layers as shown, for example, in Fig. 1 are terminated in the end fitting in such a way as to transfer the load between the flexible pipe and the connector.

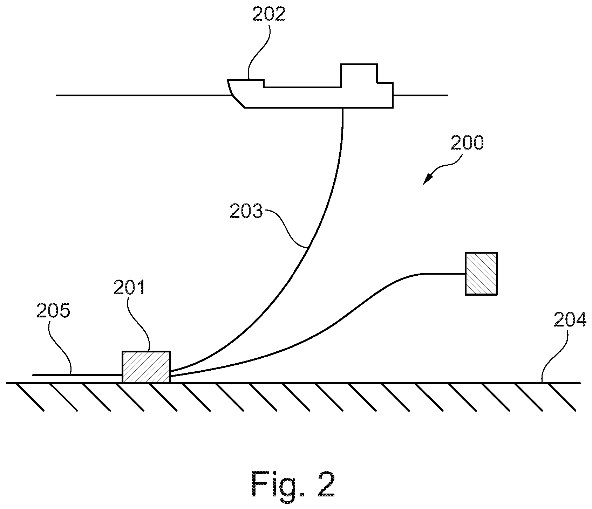

Fig. 2 illustrates a riser assembly 200 suitable for transporting production fluid such as oil and/or gas and/or water from a sub-sea location 201 to a floating facility. For example, in

Fig. 2 the sub-sea location 201 includes a sub-sea flow line. The flexible flow line 205 comprises a flexible pipe, wholly or in part, resting on the sea floor 204 or buried below the sea floor and used in a static application. The floating facility may be provided by a platform and/or buoy or, as illustrated in Fig. 2, a ship 202. The riser assembly 200 is provided as a flexible riser, that is to say a flexible pipe 203 connecting the ship to the sea floor installation. The flexible pipe may be in segments of flexible pipe body with connecting end fittings.

It will be appreciated that there are different types of riser, as is well-known by those skilled in the art. Embodiments may be used with any type of riser, such as a freely suspended (free, catenary riser), a riser restrained to some extent (buoys, chains), totally restrained riser or enclosed in a tube (I or J tubes).

Fig. 2 also illustrates how portions of flexible pipe can be utilised as a flow line 205 or jumper.

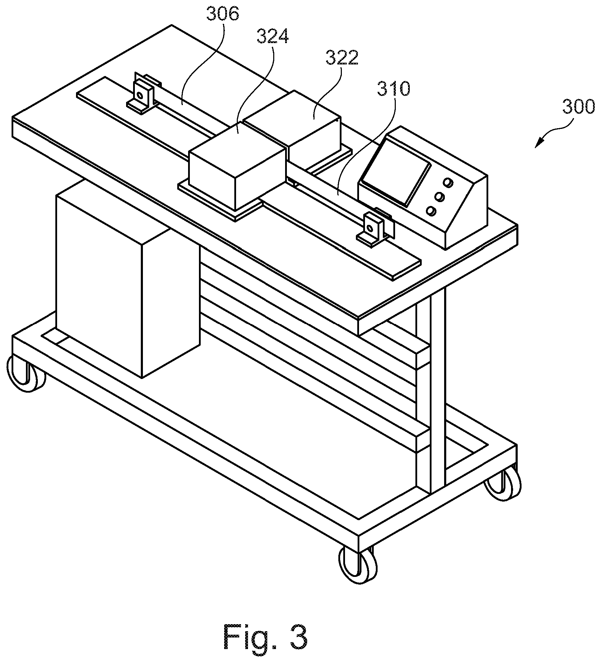

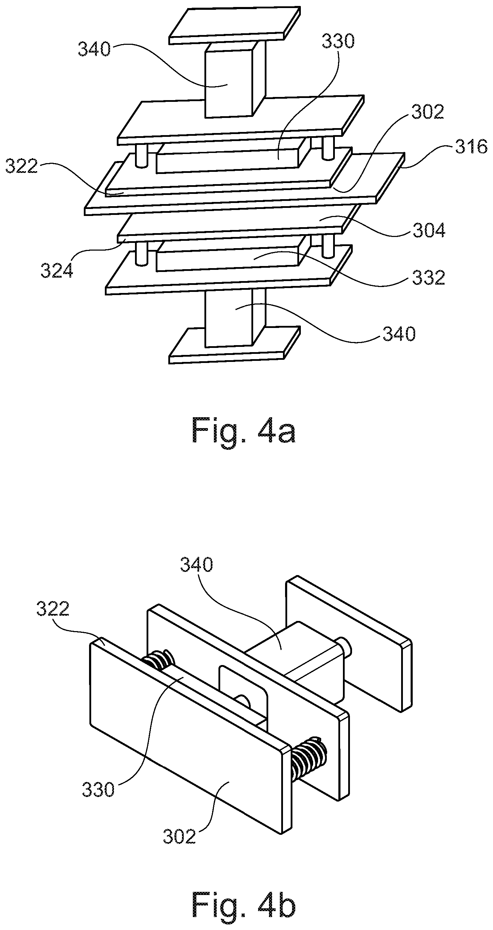

Figs. 3 and 4a illustrate a splicing apparatus 300. The apparatus 300 is suitable for use in splicing a composite tape for use in a flexible pipe, for example the flexible pipe 100 shown in Fig. 1. That is, the apparatus 300 is suitable for joining discrete lengths of composite tape together to form a continuous length of tape.

The continuous length of tape may be used to form one or more layers in the flexible pipe 100. Aptly the continuous length of tape may be used to form at least one armour layer in the flexible pipe 100. For example, the continuous length of tape may be used to form at least one of the pressure armour layer 103 and tensile armour layer 105. For example, a first length of the composite tape may first be wound to form a first section of an armour layer. The first section may include a portion or length of a single layer of the armour layer. The first length of composite tape may be joined to a second length of tape to form a continuous length of tape. The joined second length of tape may then be wound to form a second section of the armour layer. The second section may include another portion of a single layer of the armour layer adjacent the first portion. It will be appreciated that the armour layer may include one or more layers as discussed above with reference to Fig. 1, which may be formed with further windings of composite tape.

The apparatus 300 includes a first bearing surface 302 and a second bearing surface 304. The second bearing surface 304 is disposed opposite the first bearing surface 302. The first and second bearing surfaces 302, 304 may be configured for abutting against a length of composite tape. As such, the first and second bearing surfaces may alternatively be referred to as first and second abutment surfaces 302, 304.

In use, end regions of a first length of tape 306 and a second length of tape 310 may be positioned between the first bearing surface 302 and the second bearing surface 304 such that the end regions of the first and second lengths of tape overlap.

In this example a first press plate 322 includes the first bearing surface 302 and a second press plate 324 includes the second bearing surface 304.

The apparatus further includes a heater that is configured to heat a region 316 between the first bearing surface 302 and the second bearing surface 304. In this example, the heater includes a first heater cartridge 330 and second heater cartridge 332. The first and second heater cartridges 330, 332 disposed adjacent to the first and second press plates 322, 324 respectively such that they are able to heat the respective press plates. The first and second press plates 322, 324 thus also function as heating plates to heat the tape 316 disposed therebetween.

In this way, the first heater cartridge 330 and the second heater cartridge 332 are configured to conductively heat the respective press plates, which in turn conductively heat the tape 316 disposed therebetween.

Aptly, the heater cartridges and/or the heating plates may be configured to include different heating zones such that uniform heating can be achieved. The temperature of each heating zone may be monitored and controlled by thermocouple, for example.

Heating can also be achieved using friction. The tape may be subjected to vibrations between the two bearing plates between frequencies of 50 Hz and 10 MHz. Aptly, an initial frequency is from 100 Hz to 300 Hz. Optionally, the frequency may be increased once heat has been generated sufficient to start to melt and move the matrix polymer, increasing towards an ultrasonic frequency of from 20,000 Hz to 10 MHz. When using frictional heating, the pressure applied between the bearing surfaces may also be increased or decreased over time in order to control the degree and thickness of the bond at the splice location.

The first bearing surface 302 and the second bearing surface 304 are moveable with respect to each other, such that a compressive force may be applied to end regions of the first length of tape 306 and the second length of tape 310 when positioned between the first and second bearing surfaces 302, 304. That is, in this example, the first press plate 322 including the first bearing surface 302 and the second press plate 324 including the second bearing surface are moveable with respect to each other such that the first bearing surface 302 and the second bearing surface 304 are moveable towards each other.

In this example, both the first and the second bearing surfaces 302, 304 are moveable towards and away from each other in a direction substantially perpendicular to the bearing surface 302, 304.

In use, when the first bearing surface 302 and the second bearing surface 304 are moved towards each other, the end region of the first length of tape 306 may abut (or bear) against the first bearing surface 302 and the end region of the second length of tape 310 may abut (or bear) against the second bearing surface 304. As the bearing surfaces move closer together, the width of the region 316 between first bearing surface 302 and the second bearing surface 304 reduces and the end region of the first length of tape 306 will contact the end region of the second length of tape 310. The first bearing surface 302 and the second bearing surface 304 may then apply a compressive force to the end regions of the first length of tape 306 and the second length of tape 310 disposed therebetween, thereby compressing the end regions of the first and second lengths of tape 306, 310 together.

Displacement of the bearing surfaces 302, 304 may be controlled by any suitable means. In this example, the displacement of each of the bearing surfaces is controlled by a pneumatic cylinder 340. Other suitable means for controlling the displacement of the bearing surfaces may include a hydraulic cylinder, for example.

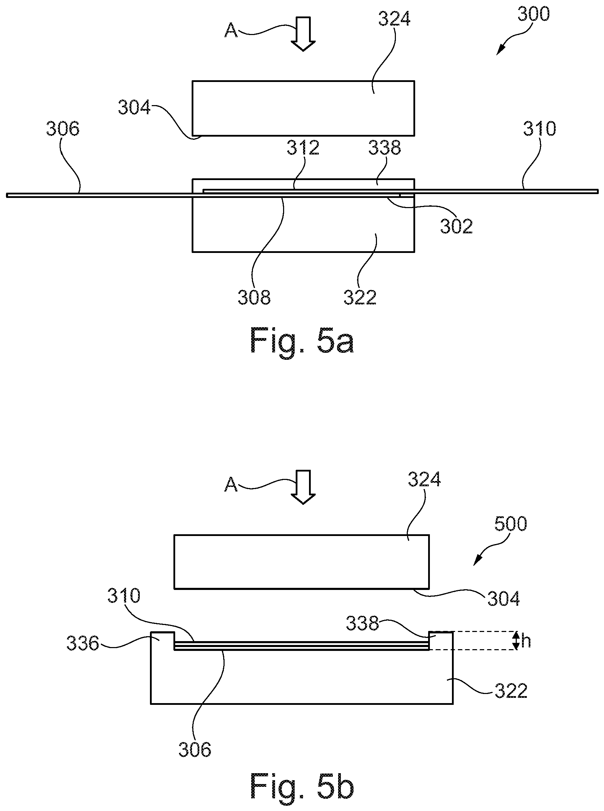

Figs. 5a and 5b illustrate the first press plate 322 and the second press plate 324 in further detail. As shown, the first press plate 322 includes the first bearing surface 302. The first bearing surface 302 is configured to support an end region 308 of the first length of tape 306.

In this example, a central region of the first bearing surface 302 is substantially planar such that end region 308 of the first length of tape may be positioned over the first bearing surface 302. In addition, a first longitudinal guide 336 and a second longitudinal guide 338 extend from the first bearing surface 302. The first and second longitudinal guides 336, 338 are configured to support and/or guide the end region 308 of the first length of tape 306 into position. In this example the longitudinal guides 336, 338 are also configured to support or guide the end region 312 of the second length of tape 310, when positioned over the end region 308 of the first length of tape 306.

In this example, the first and second longitudinal guides 336, 338 extend substantially perpendicularly from the first bearing surface 302. A height h of the longitudinal guides 336, 338 as measured perpendicularly from the bearing surface 302 is aptly equal to or greater than a thickness of the first length of tape 306. In this example, the height h of the longitudinal guides is greater than the combined thickness of the first and second lengths of tape 306, 310.

The first longitudinal guide 336 is substantially parallel with the second longitudinal guide 338. The first longitudinal guide 336 is aptly spaced apart from the second longitudinal guide 338 by a distance substantially equal to the width of the first length of tape 306.

In this example, the longitudinal guides 336, 338 form part of first and second opposed side edge portions of the first press plate 322. The longitudinal guides 336, 338 may be coupled with the first press plate 322 (e.g. via welding) or may be integrally formed with the first press plate 322.

The second press plate 324 is substantially rectangular in cross section. The second bearing surface 304 is substantially planar (i.e. flat). The second press plate 324 is configured such that it can be received between the first and second longitudinal guides 336, 338 of the first press plate 322. In other words, a width of the second press plate 324 is less than or substantially equal to a distance between the first and second longitudinal guides 336, 338.

In this way, the second press plate 324 may be moved towards the first press plate 322 in the direction of arrow A between the first and second longitudinal guides 336, 338 such that the second bearing surface 304 of the second press plate 324 may abut against the end region 312 of the second length of tape. The second press plate 324 may then apply a compressive force to the end regions 308, 312 of the first and second lengths of tape 306, 310.

The first press plate 322 and the second press plate 324 may each be formed from a metal, for example steel, or nickel alloy, or titanium alloy, or aluminium alloy, or ceramic, or ceramic matrix composite. Aptly, at least one of the first and second bearing surfaces 302, 304 include a heat resistant, non-stick surface. In this example both of the first and second bearing surfaces 302, 304 include a heat resistant, non-stick surface. The heat resistant non-stick surface may be formed as a coating over the bearing surface, for example including a polytetrafluoroethylene (PTFE) coating or a ceramic coating or a hard anodised coating on, for instance, aluminium alloy or titanium alloy. In other examples, at least one of the first and second press plates 322, 324 may be formed from a heat resistant, non-stick material such that the bearing surfaces are also heat resistant and non-stick.

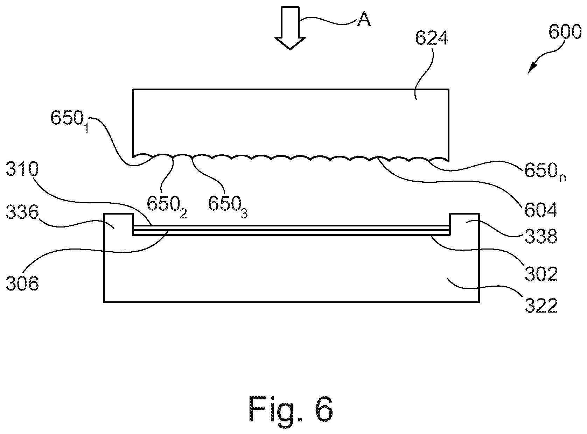

Fig. 6 illustrates another example splicing apparatus 600. The apparatus 600 includes a first press plate 322, which is substantially identical to that described above in relation to Figs. 5a and 5b and will not be described again in detail.

The splicing apparatus further includes a second press plate 624 having a second bearing surface 604. In this example, the second bearing surface 604 includes a plurality of ridges 650₁₋ₙ. In this example each of the ridges 650 extend longitudinally along the length of the bearing surface 604 (i.e. in a direction corresponding to longitudinal direction or length of the tape). In other examples, the ridges 650 may extend transversely across the width of the bearing surface 604 (i.e. in a direction corresponding to a transverse direction or width of the tape).

Similarly to the example described above in relation to Figs. 5a and 5b, the second press plate 624 is movable towards the first press plate 322 in the direction of arrow A to thereby compress end regions of the first length of tape 306 and the second length of tape 310 between the first bearing surface 302 and the second bearing surface 604.

As an alternative to a plurality of ridges 650, the bearing surface 604 may include a plurality of undulations or a plurality of protrusions. Each of the plurality of ridges, undulations, or protrusions may extend longitudinally, or transversely across the bearing surface.

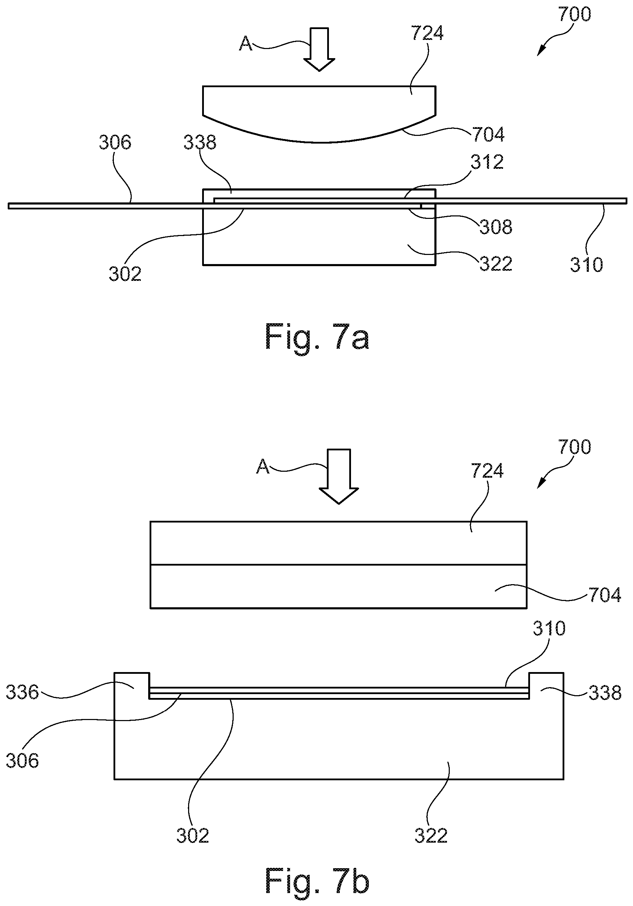

Fig. 7 illustrates another example splicing apparatus 700. The apparatus 700 includes a first press plate 322, which is substantially identical to that described above in relation to Figs. 5a and 5b and will not be described again in detail.

The apparatus 700 further includes a second press plate 724. The second press plate 724 includes a curved (or rounded) bearing surface 704. In this example, the curved bearing surface 704 is curved along a length of the second press plate 724. That is, the second press plate 724 is configured such that a side cross-section of the second press plate 724 includes the curved bearing surface 704. As shown in Fig. 7a, in this example, the curved bearing surface 704 is substantially arcuate in shape. In this way, a height of the second press-plate 704 is increased towards a central portion of the press-plate.

In this example, the second press plate 724 is configured to move relative to the first press plate 322 in the direction of arrow A. That is, the second press plate 724 is configured to move linearly towards the first press plate 302 such that the curved bearing surface is positioned between the first and second longitudinal guides 336, 338. The curved bearing surface 704 of the second press plate 724 may abut against the end region 312 of the second length of tape. The second press plate 724 may then apply a compressive force to the end regions 308, 312 of the first and second lengths of tape 306, 310.

Due to the curved bearing surface 704, the compressive force applied to the first and second lengths of tape 306, 310 is non-uniform, such that the greatest compressive force is applied in the central region of the curved bearing surface 704 (i.e. where the height of the second press plate 724 is greatest).

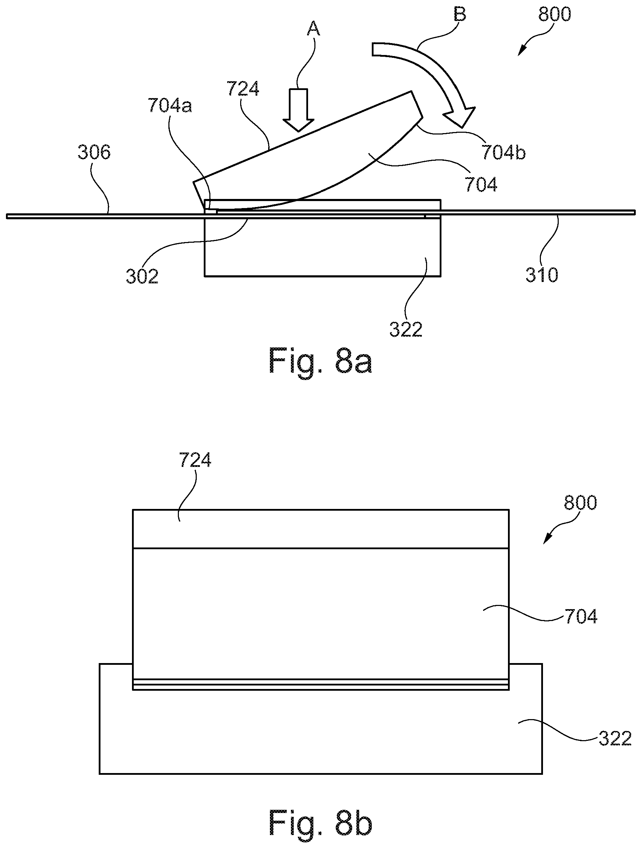

Figs. 8a and 8b illustrate a further example splicing apparatus 800. The splicing apparatus 800 is substantially identical to that described above in relation to Figs. 7a and 7b but in this example, the second press plate 724 is configured to move both linearly and rotationally with respect to the first press plate 322.

In the first instance, the second press plate 724 may be configured such that a first end 704a of the curved bearing surface 704 is rotated towards the first press plate 322, whilst a second end 704b of the curved bearing surface 704 is rotated away from the first press plate 322.

The second press plate 724 is configured to move linearly towards the first press plate 322 in the direction of arrow A, similarly to the example described above in relation to Figs. 7a and 7b. However, since the first end 704a of the curved bearing surface 704 is rotated towards the first press plate 322, the first end 704a of the curved bearing surface 704 will be the first point of the curved bearing surface 704 to contact the end region of the second length of tape.

Similarly to above, the second press plate 724 may then apply a compressive force to the end regions of the first and second lengths of tape 306, 310. The second press plate 724 may then rotate with respect to the first press plate 322 in the direction of arrow B. The axis of rotation is aptly at a central portion of the second press plate 724 in line with a centre of the arc defining the curved bearing surface 704. In other words, the axis of rotation is aptly along the a central axis of the second press plate 724, which includes the arcuate bearing surface 704. In this way, the compressive force may be applied progressively along the overlapping end regions 308, 312 of the first and second lengths of tape from a first end of the overlapping region towards a second end of the overlapping region.

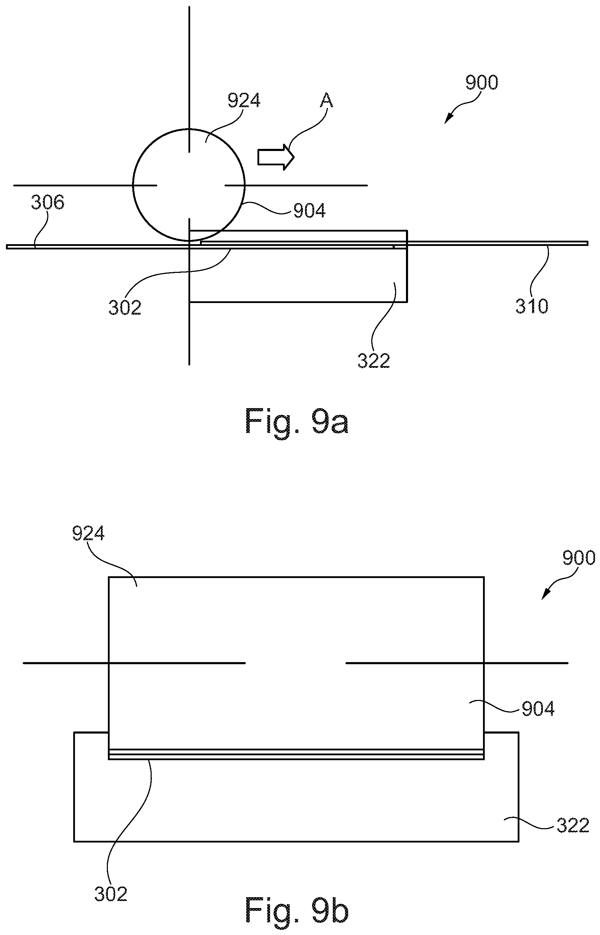

Figs. 9a and 9b illustrate an alternative example of a splicing apparatus 900. The first press plate 322 is substantially identical to the first press plate 322 described in the examples above, and for brevity will not be described again in detail.

In this example, the splicing apparatus 900 includes the first press plate 322 and a roller 924 instead of a second press plate. The roller 924 includes a bearing surface 904. The bearing surface 904 is curved or rounded. In this example, the bearing surface 904 is the outer circumferential surface of the roller 924.

The roller 924 in this example is substantially cylindrical. The roller 924 has a central longitudinal axis about which the roller may rotate. The roller 924 is configured to have a length equal to or greater than a width of the first and second lengths of tape 306, 310. Aptly, the length of the roller is substantially equal to the width of the first bearing surface of the first press plate 322. For example in which the first press plate 322 includes first and second longitudinal guides 336, 338 such as those described in relation to Figs. 5a and 5b, the length of the roller 924 is aptly configured to fit between the first and second longitudinal guides.

The roller 924 is configured to rotate about its central longitudinal axis and translate linearly with respect to the first press plate 324 in the direction of arrow A. In other words, the roller is configured to roll along a length of the first bearing surface 302.

In use, the end regions of the first and second lengths of tape may be positioned on the first bearing surface 302. The roller 924 may then roll over the first bearing surface 302 such that the end regions of the first and second lengths of tape 306, 310 are compressed between the first bearing surface 302 of the first press plate 322 and the second bearing surface 904 of the roller 924. As such, the compressive force may be applied progressively along a length of the overlapping region of the first and second lengths of tape 306, 310.

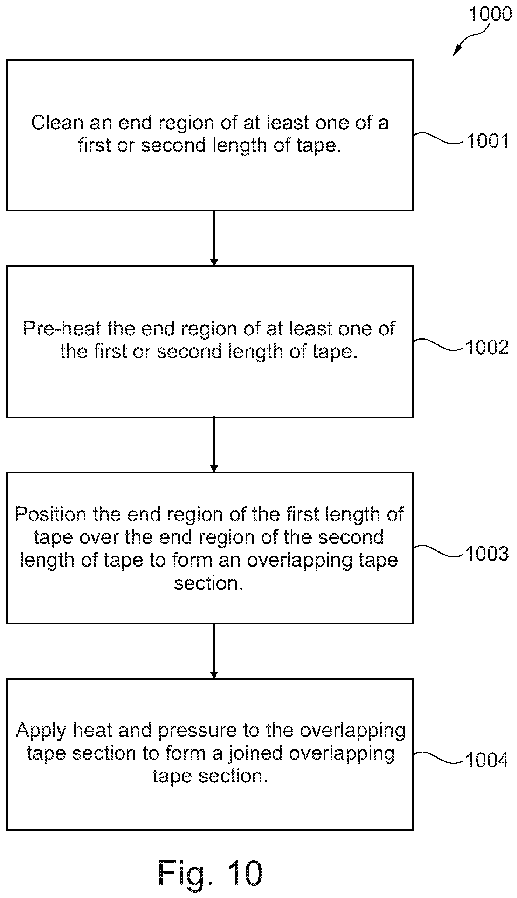

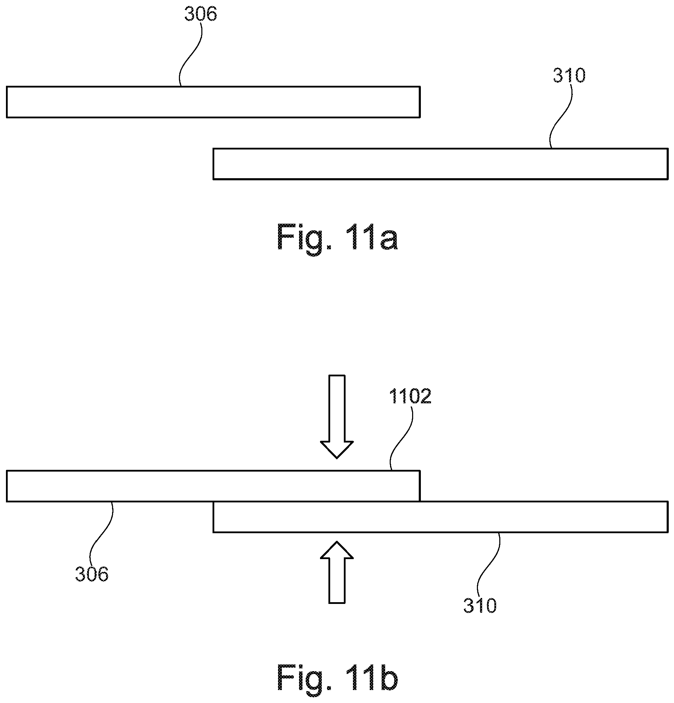

Figs. 10, 11a and 11b illustrate an example method 1000 of splicing a composite tape for use in a flexible pipe. It will be appreciated that the method 1000 described herein may be carried out using any of the example splicing apparatus described herein.

The composite tape used in the method 1000 is aptly a composite tape comprising longitudinally extending fibres embedded in a matrix material. The fibres aptly extend substantially continuously along the length of the composite tape. In this way, when wound to form a layer in a flexible pipe (e.g. a pressure armour layer) the fibres help to maintain consistent hoop strength throughout the layer. An example of such a suitable tape material can be found in WO2018/060718.

In a first optional step 1001, the end region of at least one of the first length of tape 306 and the second length of tape 310 may be cleaned. Cleaning the end regions can help to bond the lengths of tape together in the splicing process and may help to create a stronger join.

Aptly the end regions of at least one of the first and second lengths of tape 306, 310 are cleaned to remove or substantially remove any contaminants, for example dust, grease, oils, debris, fibres and the like. For example, the end regions of the first and second lengths of tape may be wiped clean. For example, the end regions may be wiped with one or more of a solvent wipe, an alcohol wipe, or a water wipe. Aptly the wipe is lint free to help minimise dust or fibres being left on the tape. Alternatively, a length of tape may be cleaned using a continuous, semi-automatic or process ultrasonic cleaning system such as is available from Hielscher Ultrasonics.

It will be appreciated that other cleaning methods may be used to remove any dust, debris, grease and oils from the end regions of the first and second lengths of tape, as will be known to those skilled in the art.

In another optional step 1002, at least one of the first and second lengths of tape 306, 310 may be preheated. The preheating may be carried out using any suitable heating apparatus. The heating apparatus used for the preheating may be included in the splicing apparatus or may be a separate preheating device.

In this example, the first and second lengths of tape 306, 310 are preheated using a separate preheating device (not shown).

At step 1003 an end region of the first length of tape 306 is positioned over an end region of the second length of tape 310 to form an overlapping tape section 1100. As mentioned above, prior to forming the overlapping tape section 1100 one or both of the end regions of the first and second lengths of tape 306, 310 may be cleaned and/or preheated.

In forming the overlapping tape section, the end regions of each of the first length of tape 306 and the second length of tape 310 are aligned such that longitudinal fibres in each of the lengths of tape are aligned in substantially the same direction. In this way, the strength provided by the fibres in the longitudinal direction of the tape can be maintained across the join.

Furthermore, the end regions of each of the first length of tape 306 and the second length of tape 310 are aptly aligned in the transverse direction such that an entire surface of the end region of the first length of tape 306 overlays an entire surface of the end region of the second length of tape 310.

Alignment of the first length of tape 306 and the second length of tape 310 may be controlled through use of a first longitudinal guide 336 and a second longitudinal guide 338 such as those described above.

In step 1003, the overlapping tape section 1100 may be formed by positioning the lengths of tape over one or more bearing surfaces of a splicing apparatus. For example, for the splicing apparatus of Fig. 5a and 5b, both the first and second lengths of tape may be positioned over the first bearing surface 302 to form the overlapping tape section. The overlapping tape section may similarly be formed in any of the other splicing apparatus described herein.

At step 1004 heat and pressure is applied to the overlapping tape section 1100 to form a joined overlapping tape section 1102 in which the first length of tape 306 is joined to the second length of tape 310. The joined overlapping tape section 1102 is configured to have a lap shear strength of at least 11 MPa.

Aptly, heat may be applied to both sides of the overlapping tape section 1100. That is, heat may be applied to both of the first length of tape 306 and the second length of tape 310 at the overlapping tape section 1100. Applying the heat to both sides of the overlapping tape section can help to provide even distribution of heat throughout the overlapping tape section, which can help to speed up the joining process and provide a more uniform join, of uniform thickness.

In one example, the heat may be applied to the overlapping tape section at a different time to the application of pressure. For example, the pressure may first be applied to the overlapping tape section and subsequently the heat may be applied to the overlapping tape section.

In some examples, the application of heat and pressure may overlap. For example, the application of heat may commence at a different time to the application of pressure. In one example, the application of pressure may commence prior to commencing the application of heat.

The method may further include monitoring at least one of the pressure or heat applied to the overlapping tape section. For example, a pressure sensor may be used to monitor the pressure applied to the overlapping section. The pressure sensor may feed back to a controller, which may then control the applied pressure (e.g. by controlling relative movement of one or more bearing surfaces of the splicing apparatus) in response to the monitored pressure.

Similarly, a temperature sensor may be used to monitor the temperature applied to the overlapping tape section. The temperature sensor may also feed back to the controller, which may the control the applied heat (e.g. by adjusting power supplied to the heater) in response to the monitored temperature.

The method may further include the application of vibration to the overlapping tape section. This may take the form of ultrasonic range vibrations. For example, at least one bearing surface may be vibrated either laterally, longitudinally, or both, at a frequency of from 20,000 Hz to 10 MHz. This vibration does not itself significantly soften and join the polymer of the matrix material, as distinct from a vibration welding process for polymers, however does assist in the comingling of reinforcement fibres within the softened polymer during the splicing process, and this can help to assist the mixing of the fibres of the two tape ends to ensure a high performance splice. Vibrations at a lower frequency may also be used, for example down to around 50 Hz. However, with the use of lower frequencies, the splicing operation may take longer to complete.

As mentioned above, the method 1000 may be carried out using any of the example splicing apparatus described herein. As such, at least one of the heat and pressure may be applied to the overlapping tape section via at least one press plate including a bearing surface, for example the press plate 322 of Fig. 5a including the bearing surface 302.

In some examples, at least one of the heat and pressure may be applied evenly over the overlapping tape section. For example, the bearing surface of the at least one press plate may be configured to apply heat and/or pressure substantially evenly across the overlapping tape section.

For example, if using the apparatus of the example shown in Fig. 5a, the heat and the pressure may be applied via the first bearing surface 302 and/or the second bearing surface 304. Due to the substantially planar configuration of the first and second bearing surfaces 302, 304 an even pressure may be applied to the overlapping tape section. Similarly, the at least one of the first and second bearing surfaces 302, 304 may be configured to apply heat substantially evenly across the bearing surface so as to substantially evenly heat the overlapping tape section therebetween.

In other examples, at least one of the heat and pressure may be applied unevenly over the overlapping tape section. For example, the bearing surface of the at least one press plate may be configured to apply heat and/or pressure unevenly across the overlapping tape section.

For example, the splicing apparatus 600 of Fig. 6 includes a second bearing surface 604 configured to apply heat and/or pressure unevenly across the overlapping tape section. In this example the plurality of ridges 650 help to provide uneven application of pressure to the overlapping tape section positioned between the first and second bearing surfaces. Greater pressure will be applied to the overlapping tape section at the peaks of the ridges compared to the troughs between the ridges.

Similarly, due the plurality of ridges, where the second bearing surface 604 is heated, the bearing surface 604 will unevenly heat the overlapping tape section.

The uneven application of heat and/or pressure may be applied unevenly either across or along the overlapping tape section. For example, the bearing surface may be configured to unevenly apply heat and/or pressure along the length of the overlapping tape section or across the width of the overlapping tape section.

For example, the curved bearing surface 704 in the example of Fig. 7a is configured to apply pressure (and optionally heat) unevenly along the length of the overlapping tape section. In this example, the greatest pressure is applied in a central region of the overlapping tape section.

In other examples the heat and/or pressure may be applied progressively along the length of the overlapping tape section from a first end of the overlapping tape section to a second end of the overlapping tape section.

For example, at least one of the bearing surfaces may be configured to apply heat and pressure to the overlapping tape section starting from a first end of the overlapping tape section and progressing to a second end of the overlapping tape section.

As discussed above, in the example splicing apparatus 800 of Fig. 8a, the second press plate 724 includes the curved bearing surface 704 and is configured to translate and rotate with respect to the first press plate 322. In this way, the curved bearing surface 704 is configured to rock (or rotate) over the overlapping tape section such that pressure may be applied to the overlapping tape section starting at a first end and progressing towards a second end of the overlapping tape section.

The second press plate 724 may similarly be heated to thereby progressively apply heat along the overlapping tape section from the first end to the second end of the overlapping tape section.

The example splicing apparatus 900 shown in Fig. 9a may also be configured to progressively apply heat and/or pressure to the overlapping tape section via the roller 924. As described above, the roller 924 including the curved bearing surface 904 is configured to roll along the overlapping tape section from the first end of the overlapping tape section to the second end of the overlapping tape section. In this way, pressure can be progressively applied to the overlapping tape section from the first end to the second end.

The roller 924 may similarly be heated to thereby progressive apply heat along the overlapping tape section from the first end to the second end of the overlapping tape section.

Following step 1004, the heater may be turned off and the joined overlapping tape section is left to cool. In some examples additional cooling may be provided (e.g. via a fan or compressed air flow) to enable quicker cooling of the joined overlapping tape section.

The pressure may then be removed from the overlapping tape portion (e.g. by separating the one or more press plates).

To help ensure a joined overlapping tape section having a lap shear strength of at least 11 MPa, at least one of the applied heat and pressure may be monitored or controlled during the splicing process. Other factors may also be controlled, for example a cut angle of the end region of the lengths of tape, the width of the tape used, and the length of the overlapping tape section.

For example, the overlapping tape section may be heated to a temperature of from 150 degrees Celsius to 350 degrees Celsius, for example from 180 degrees Celsius to 215 degrees Celsius. The optimum temperature may depend on the melting temperature of the tape. For example, the heating temperature for a PVDF or polyethylene material may aptly be from 180 degrees Celsius to 215 degrees Celsius, whilst the heating temperature for PEEK materials may aptly be at least 300 degrees Celsius.

The pressure applied to the overlapping tape section may be from 0.1 N/mm² to 5 N/mm², or more aptly from 0.25 N/mm² to 1.0 N/mm², or aptly from 0.30 N/mm² to 0.40 N/mm².

As described above, the pressure applied to the overlapping tape section may be monitored during the splicing operation and may be varied depending on the temperature used: the higher the temperature the lower the required pressure. In response to the monitored pressure, the pressure may be controlled to adjust the pressure applied to the overlapping tape section. For example, the displacement of at least one of the at least one pressure plate, may be monitored and/or controlled during the splicing operation to control and/or adjust the pressure applied to the overlapping tape section.

The pressure may be applied to the overlapping tape section for a length of time from 1 second to 5 minutes. Aptly, the pressure may be applied to the overlapping tape section for a length of time from 1 second to 120 seconds. Aptly the pressure may be applied to the overlapping tape section for a length of time from 1 second to 30 seconds.

Each length of tape may aptly have a thickness from 0.05 mm to 0.5 mm, for example 0.25 mm or 0.4 mm.

Each length of tape may be from 15 mm to 200 mm in width, or more aptly from 20 mm to 100 mm in width.

The end of at least one of the first and second lengths of tape may be cut at an angle of 90° ± 10° with respect to the longitudinal direction of the tape. The end of the tape may be cut using any appropriate cutting tool, for example a sharp blade, guillotine, or the like.

The end of the first length of tape may be positioned over the end of the second length of tape such that the overlapping tape section is at least 20 mm in length. For example, the overlapping tape section may aptly be from 20 mm to 100 mm in length, or more aptly around 20 mm to 30 mm in length. The length of the overlapping tape section is selected such that the join maintains desired strength whilst also minimising the length of the overlapping tape section so as not to compromise flexibility of the tape.

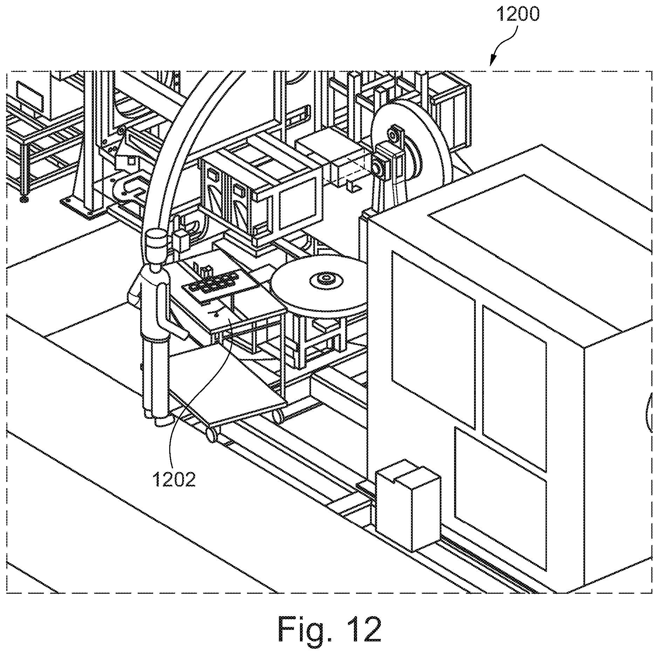

Fig. 12 illustrates a splicing apparatus positioned in relation to a production line 1200. In this example, the splicing apparatus is supported on a trolley 1202. When two lengths of composite tape need to be joined together to continue production, the trolley 1202 supporting the splicing apparatus may be wheeled into position such that it is adjacent the spools supporting the respective lengths of tape. In some examples a pit cover may first be positioned to enable placement of the trolley as close as possible to the machine body to allow enough space for an operator.

Once the trolley is in position, the splicing process may be carried out using the splicing apparatus as described herein. Following the splicing process, the trolley may then be removed to avoid any collisions on the production line.

Various modifications to the detailed arrangements as described above are possible. For example, at least one of the first or second press plates may further include a length guide for axially positioning and/or locating a pre-determined length of at least one of the first or second lengths of tape. For example, the length guide may extend transversely across the bearing surface of at least one of the press plates, to thereby define a length of the overlapping tape section. The length guide may include a marking or protrusion on the bearing surface to help aid positioning of the lengths of tape.

In some examples, the splicing process may be an automated process. For example, the apparatus may include a controller to control the splicing process. An operator may input to the controller the properties of the lengths of tape for splicing (e.g. the material, the thickness, and/or the width). The controller may then compute the optimum applied temperature, pressure and length of time for applying the temperature and pressure. Once the lengths of tape are in position, the controller may then control the splicing apparatus and the feeding of the tape into it, to heat, compress and optionally cool the overlapping tape section to form the joined overlapping tape section. For this degree of automation there may be loading processes, performed by an operator, for roll of tape which includes the presetting of an outer end of the roll of tape

Although in the examples described above, only one of the bearing surfaces is configured to move, in other examples, both of bearing surfaces move with respect to each other to thereby apply a compressive force to the overlapping tape section when positioned therebetween.

In some examples, at least one of the first and second lengths of tape may be clamped into position in the splicing apparatus using one or more clamps. For example, the splicing apparatus may include one or more clamps for clamping at least one of the first and second lengths of tape in position with respect to at least one of the first and second bearing surfaces. The at least one clamp may be positioned adjacent to the bearing surface and may be configured to substantially prevent movement of at least one length of tape with respect to the bearing surface.

With the above-described arrangement splicing of composite tape may be carried out more accurately and efficiently than previously known methods.

Certain examples described herein allow for consistent and reliable splicing of composite tape resulting in a join having a lap shear strength greater than that achievable with many known splicing methods.

Certain examples described herein allow for a splicing method that provides improved operator safety compared to known splicing methods.

Certain examples described herein allow for improved splicing of composite tape compared to known methods.

Certain examples described herein provide a method that ensure repeatability, that in turn improves the tape splice quality.

Careful alignment of the end regions of tape as described herein helps to ensure transfer of stress across the fibres in the join, thereby maintaining strength across the join. Also, careful alignment helps to maintain the desired pitch of the fibres when wound in a flexible pipe layer, so that the pitch remains consistent along the entire length of the pipe.

### EXAMPLES

According to one example, a number of different single lap joint specimens were manufactured using the splicing apparatus and subsequently tested to determine the lap shear strength at the matrix interface of the spliced tapes. Maximum, minimum, and average values of failure load were observed during these tests and the type of failure recorded and analysed.

For samples of PVDF/Carbon composite tape having a width of 80 mm and a thickness of 0.2 mm, the parameters used for the splicing process are outlined in the following Table 1. All tests were performed at room temperature.

**Table 1**

| | |
|---|---|
| Temp (°C) | 215 |
| Splicing Time (Seconds) | 220 |
| Pressure (N/mm²) | 0.35 |
| Splice length (mm) | 20 |

Ten different samples were tested. Test samples 1-4, 9 and 10 were not cleaned prior to splicing. Test samples 5-8 were cleaned prior to splicing. The average lap shear strength measured for the samples is outlined in Table 2 below.

**Table 2**

| **Test sample Nos.** | **Condition** | **Average Lap Shear Strength (MPa)** |
|---|---|---|
| Samples 1-4, 9 & 10 | Un-cleaned | 13 |
| Samples 5-8 | Cleaned | 16 |

As shown in the table above, the clean samples exhibited an increase in lap shear strength compared to the uncleaned samples.

It will be clear to a person skilled in the art that features described in relation to any of the embodiments described above can be applicable interchangeably between the different embodiments. The embodiments described above are examples to illustrate various features of the invention.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

## Claims

1. A method of manufacturing an armour layer of a flexible pipe for transporting fluid from a subsea location, the method comprising:
winding a first length of composite tape (306) to form a first section of the armour layer;
positioning an end region (308) of the first length of composite tape over an end region (312) of a second length of composite tape (310) to form an overlapping tape section (1100) and applying heat and pressure to the overlapping tape section to form a joined overlapping tape section (1102) in which the first length of tape is joined to the second length of tape such that the joined overlapping tape section has a lap shear strength of at least 11 MPa; and
winding the joined overlapping tape section and the second length of composite tape to form a second section of the armour layer.

2. A method according to claim 1, wherein at least one of the heat and pressure is applied to the overlapping tape section (1100) via at least one press plate (332, 334) comprising a bearing surface (302, 304).

3. A method according to any preceding claim, wherein at least one of the heat and pressure is applied evenly over the overlapping tape section (1100).

4. A method according to any of claims 1 or 2, wherein at least one of the heat and pressure is applied unevenly over the overlapping tape section (1100).

5. A method according to claim 4, wherein at least one of the heat and pressure is applied unevenly either across or along the overlapping tape section (1100).

6. A method according to any preceding claim, wherein at least one of the heat and pressure is applied progressively along a length of the overlapping tape section (1100) from a first end of the overlapping tape section to a second end of the overlapping tape section.

7. A method according to any preceding claim, wherein at least one of the heat and pressure is applied to the overlapping tape section (1100) via at least one roller (924).

8. A method according to any preceding claim, wherein applying the heat and pressure comprises commencing the application of heat at a different time to commencing the application of pressure.

9. A method according to any preceding claim, wherein applying the heat and pressure comprises commencing the application of pressure prior to commencing the application of heat.

10. A method according to any preceding claim, wherein the first and second end regions (308, 312) are cleaned.

11. A method according to any preceding claim, further comprising monitoring at least one of the applied heat or the applied pressure.

12. A method according to claim 11, further comprising controlling, in response to the monitoring, at least one of the applied heat or the applied pressure.

13. A method according to any preceding claim, further comprising pre-heating the end region (308, 312) of at least one of the first or second lengths of tape (306, 310), prior to forming the overlapping tape section (1100).

14. A method according to any preceding claim, further comprising vibrating the overlapping tape section (110), and optionally;
wherein the vibrating the overlapping tape section comprises applying ultrasonic range vibrations to the overlapping tape section.

15. A method according to claim 14, wherein the overlapping tape section (1100) is vibrated laterally and/or longitudinally.

## Patentansprüche

1. Verfahren zum Herstellen einer Panzerungsschicht eines flexiblen Rohrs zum Transportieren von Fluid von einer Unterwasserstelle, das Verfahren umfassend:
Aufwickeln einer ersten Länge Verbundband (306), um einen ersten Bereich der Panzerungsschicht auszubilden;
Positionieren einer Endregion (308) der ersten Länge des Verbundbandes über einer Endregion (312) einer zweiten Länge des Verbundbandes (310), um einen überlappenden Bandbereich (1100) auszubilden, und Anwenden von Wärme und Druck auf den überlappenden Bandbereich, um einen verbundenen überlappenden Bandbereich (1102) auszubilden, in dem die erste Länge des Bandes mit der zweiten Länge des Bandes derart verbunden ist, dass der verbundene überlappende Bandbereich eine Überlappungsscherfestigkeit von mindestens 11 MPa aufweist; und
Aufwickeln des verbundenen überlappenden Bandbereichs und der zweiten Länge des Verbundbandes, um einen zweiten Bereich der Panzerungsschicht auszubilden.

2. Verfahren nach Anspruch 1, wobei mindestens eines von der Wärme und dem Druck auf den überlappenden Bandbereich (1100) über mindestens eine Pressplatte (332, 334), umfassend eine Tragefläche (302, 304), ausgeübt wird.

3. Verfahren nach einem der vorstehenden Ansprüche, wobei mindestens eines von der Wärme und dem Druck auf den überlappenden Bandbereich (1100) gleichmäßig ausgeübt wird.

4. Verfahren nach einem der Ansprüche 1 oder 2, wobei mindestens eines von der Wärme und dem Druck über den überlappenden Bandbereich (1100) ungleichmäßig ausgeübt wird.

5. Verfahren nach Anspruch 4, wobei mindestens eines von der Wärme und dem Druck entweder über oder entlang des überlappenden Bandbereichs (1100) ungleichmäßig ausgeübt wird.

6. Verfahren nach einem der vorstehenden Ansprüche, wobei mindestens eines von der Wärme und dem Druck entlang einer Länge des überlappenden Bandbereichs (1100) von einem ersten Ende des überlappenden Bandbereichs zu einem zweiten Ende des überlappenden Bandbereichs schrittweise angewendet wird.

7. Verfahren nach einem der vorstehenden Ansprüche, wobei mindestens eines von der Wärme und dem Druck auf den überlappenden Bandbereich (1100) über mindestens eine Walze (924) ausgeübt wird.

8. Verfahren nach einem der vorstehenden Ansprüche, wobei das Anwenden der Wärme und des Drucks das Beginnen der Wärmeanwendung zu einem unterschiedlichen Zeitpunkt als das Beginnen der Druckanwendung umfasst.

9. Verfahren nach einem der vorstehenden Ansprüche, wobei das Anwenden von Wärme und Druck das Beginnen der Druckanwendung vor dem Beginnen der Wärmeanwendung umfasst.

10. Verfahren nach einem der vorstehenden Ansprüche, wobei die erste und die zweite Endregion (308, 312) gereinigt werden.

11. Verfahren nach einem der vorstehenden Ansprüche, ferner umfassend das Überwachen von mindestens einem der angewendeten Wärme oder des angewendeten Drucks.

12. Verfahren nach Anspruch 11, das ferner umfassend das Steuern, als Reaktion auf die Überwachung, von mindestens einem der angewandten Wärme oder des angewandten Drucks.

13. Verfahren nach einem der vorstehenden Ansprüche, ferner umfassend das Vorwärmen der Endregion (308, 312) von mindestens einer der ersten oder der zweiten Bandlänge (306, 310) vor dem Ausbilden des überlappenden Bandbereichs (1100).

14. Verfahren nach einem der vorstehenden Ansprüche, ferner umfassend ein Vibrieren des überlappenden Bandbereichs (110) und optional;
wobei das Vibrieren des überlappenden Bandbereichs das Anwenden von Vibrationen im Ultraschallbereich auf den überlappenden Bandbereich umfasst.

15. Verfahren nach Anspruch 14, wobei der überlappende Bandbereich (1100) seitlich und/oder in Längsrichtung vibriert wird.

## Revendications

1. Procédé de fabrication d'une couche d'armure d'une conduite flexible permettant de transporter un fluide provenant d'un emplacement sous-marin, le procédé comprenant :
l'enroulement d'une première longueur de ruban composite (306) pour former une première section de la couche d'armure ;
le positionnement d'une zone d'extrémité (308) de la première longueur de ruban composite sur une zone d'extrémité (312) d'une seconde longueur de ruban composite (310) pour former une section de ruban à chevauchement (1100) et l'application de chaleur et de pression à la section de ruban à chevauchement pour former une section de ruban à chevauchement jointe (1102) dans laquelle la première longueur de ruban est jointe à la seconde longueur de ruban de telle sorte que la section de ruban à chevauchement jointe a une résistance au cisaillement par chevauchement d'au moins 11 MPa ; et
l'enroulement de la section de ruban à chevauchement jointe et de la seconde longueur de ruban composite pour former une seconde section de la couche d'armure.

2. Procédé selon la revendication 1, dans lequel au moins l'une parmi la chaleur et la pression est appliquée à la section de ruban à chevauchement (1100) par l'intermédiaire d'au moins une plaque de pressage (332, 334) comprenant une surface d'appui (302, 304).

3. Procédé selon l'une quelconque revendication précédente, dans lequel au moins l'une parmi la chaleur et la pression est appliquée de façon régulière sur la section de ruban à chevauchement (1100).

4. Procédé selon l'une quelconque des revendications 1 ou 2, dans lequel au moins l'une parmi la chaleur et la pression est appliquée de façon irrégulière sur la section de ruban à chevauchement (1100).

5. Procédé selon la revendication 4, dans lequel au moins l'une parmi la chaleur et la pression est appliquée de façon irrégulière à travers ou le long de la section de ruban à chevauchement (1100).

6. Procédé selon l'une quelconque revendication précédente, dans lequel au moins l'une parmi la chaleur et la pression est appliquée progressivement sur une longueur de la section de ruban à chevauchement (1100) d'une première extrémité de la section de ruban à chevauchement à une seconde extrémité de la section de ruban à chevauchement.

7. Procédé selon l'une quelconque revendication précédente, dans lequel au moins l'une parmi la chaleur et la pression est appliquée à la section de ruban à chevauchement (1100) par l'intermédiaire d'au moins un rouleau (924).

8. Procédé selon l'une quelconque revendication précédente, dans lequel l'application de la chaleur et de la pression comprend le commencement de l'application de chaleur à un moment différent du commencement de l'application de pression.

9. Procédé selon l'une quelconque revendication précédente, dans lequel l'application de la chaleur et de la pression comprend le commencement de l'application de pression avant le commencement de l'application de chaleur.

10. Procédé selon l'une quelconque revendication précédente, dans lequel les première et seconde zones d'extrémité (308, 312) sont nettoyées.

11. Procédé selon l'une quelconque revendication précédente, comprenant en outre la surveillance d'au moins l'une parmi la chaleur appliquée ou la pression appliquée.

12. Procédé selon la revendication 11, comprenant en outre la régulation, en réponse à la surveillance, d'au moins l'une parmi la chaleur appliquée ou la pression appliquée.

13. Procédé selon l'une quelconque revendication précédente, comprenant en outre le préchauffage de la zone d'extrémité (308, 312) d'au moins l'une parmi les première ou seconde longueurs de ruban (306, 310), avant la formation de la section de ruban à chevauchement (1100).

14. Procédé selon l'une quelconque revendication précédente, comprenant en outre la vibration de la section de ruban à chevauchement (110), et éventuellement ;
dans lequel la vibration de la section de ruban à chevauchement comprend l'application de vibrations ultrasonores à la section de ruban à chevauchement.

15. Procédé selon la revendication 14, dans lequel la section de ruban à chevauchement (1100) est vibrée latéralement et/ou longitudinalement.
